# EUROPÄISCHE PATENTSCHRIFT

(11) **EP 3 765 326 B1**
(45) Veröffentlichungstag und Bekanntmachung des Hinweises auf die Patenterteilung: **02.12.2026**
(21) Anmeldenummer: 18716960.2
(22) Anmeldetag: 30.03.2018
(51) Int. Cl.: B60L 5/32

(54) **VORRICHTUNG UND VERFAHREN ZUR REGELUNG EINES STROMABNEHMERS FÜR EIN FAHRZEUG**
DEVICE AND METHOD FOR CONTROLLING A CURRENT COLLECTOR FOR A VEHICLE
DISPOSITIF ET PROCÉDÉ DE RÉGULATION D'UN COLLECTEUR DE COURANT POUR UN VÉHICULE

(43) Veröffentlichungstag der Anmeldung: 20.01.2021
(73) Patentinhaber: Siemens Mobility Austria GmbH, 1210 Wien (AT)
(72) Erfinder: SALIGER, Christian, 1130 Wien (AT); ASCHAUER, Guilherme, 1220 Wien (AT); HORAK, Roman, 2325 Velm (AT); REICHARDT, Walter, 7091 Breitenbrunn (AT)
(74) Vertreter: Siemens Patent Attorneys
(86) Internationale Anmeldenummer: PCT/EP2018/058296
(87) Internationale Veröffentlichungsnummer: WO 2019/185166

(56) Entgegenhaltungen:
- WO-A1-2004/026615
- DE-A1- 10 249 896
- DE-A1- 102013 217 429
- DE-C1- 19 540 913

## Beschreibung

Die Erfindung betrifft eine Vorrichtung zur Regelung eines pneumatisch betätigten Stromabnehmers für ein Fahrzeug, wobei eine Regelstrecke vorgesehen ist, die einen ersten Druckregler, einen zweiten Druckregler sowie eine Betätigungsvorrichtung aufweist.

Um Verschleiß bzw. Beschädigungen von Schleifstücken von Stromabnehmern zu reduzieren bzw. zu vermeiden, ist eine präzise Regelung von Kontaktkräften zwischen diesen Schleifstücken und einem Fahrdraht oder einer Stromschiene etc. erforderlich. Hohe Kontaktkräfte bewirken Verschleiß aufgrund starker Reibung zwischen Schleifstück und Fahrdraht oder Stromschiene, zu geringe Kontaktkräfte bewirken Lichtbögen zwischen Schleifstück und Fahrdraht oder Stromschiene, wodurch wiederum Verschleiß verursacht wird. Normen (z.B. die Europäische Norm 50367) geben zulässige Kontaktkraftbereiche in Abhängigkeit einer Fahrgeschwindigkeit vor.

Stromabnehmer-Kontaktkräfte werden häufig unter Ausnutzung von aerodynamischen Kräften, die mittels Windleitblechen beeinflusst werden, eingestellt.

Weiterhin sind Stromabnehmer mit pneumatischer Druckregelung bekannt.

So beschreibt beispielsweise die EP 1 862 347 B1 eine Steuerungsvorrichtung und ein Steuerungsverfahren für einen mittels eines Luftbalgs betätigten Stromabnehmer, wobei die Steuerungsvorrichtung einen Druckregler aufweist. Auf Grundlage von mittels eines Sensors gemessenen Drucksignalen und Geschwindigkeitssignalen wird ein Drucksollwert eingestellt. Eine Voreinstellung dieses Drucksollwerts erfolgt mechanisch, dynamische Anpassungen der Voreinstellungen werden pneumatisch vorgenommen.

Aus dem Stand der Technik ist weiterhin die EP 1 975 584 B1 bekannt, in der eine Vorrichtung und ein Verfahren zur Kontaktkraftmessung zwischen einem Stromabnehmer und einem Fahrdraht offenbart sind. Es sind ein als Dehnungssensor ausgebildeter Kontaktkraftsensor sowie eine Kraftmesszelle vorgesehen, wodurch sowohl statische als auch dynamische Kontaktkräfte synchron gemessen und ausgewertet werden können.

Die Kraftmesszelle ist dabei in einer Weise ausgeführt, dass Temperatureinflüsse auf die Kontaktkräfte aufgrund eines charakteristischen Sensoransprechverhaltens von einer Kontaktkraftauswertung ausgeschlossen werden können, d.h. Ergebnisse der Kontaktkraftauswertung werden von Temperaturänderungen nicht beeinflusst.

Des Weiteren offenbart WO2004026615A1 eine gattungsgemäße Vorrichtung zur Regelung eines pneumatisch betätigten Stromabnehmers mit zwei Druckreglern.

Die genannten Ansätze weisen in ihren bekannten Formen den Nachteil auf, dass keine Regelung eines Stromabnehmers sowohl auf Grundlage einer Kontaktkraft als auch auf Grundlage eines Drucks vorgesehen ist.

Der Erfindung liegt daher die Aufgabe zugrunde, eine gegenüber dem Stand der Technik weiterentwickelte und besonders präzise sowie redundante und daher sichere Vorrichtung bzw. ein weiterentwickeltes Verfahren zur Regelung eines Stromabnehmers anzugeben.

Erfindungsgemäß wird diese Aufgabe gelöst mit einer Vorrichtung zur Regelung eines pneumatisch betätigten Stromabnehmers der eingangs genannten Art, die gemäß dem ersten unabhängigen Anspruch ausgestaltet ist;
bei welcher , neben den anderen Merkmalen des ersten unabhängigen Ansrpruchs, auf dem Stromabnehmer zumindest ein Sensor, welcher mit einem Kontaktkraftregler der Regelstrecke signalleitend verbunden ist, anordenbar ist, bei welcher der erste Druckregler mit dem Kontaktkraftregler, dem zweiten Druckregler sowie einer Druckversorgung signalleitend gekoppelt ist, wobei der zweite Druckregler einen Anschluss für einen Ist-Pilotdruck aus dem ersten Druckregler aufweist, und
bei welcher zwischen dem zweiten Druckregler und der Druckversorgung sowie zwischen dem zweiten Druckregler und der Betätigungsvorrichtung signalleitende Verbindungen vorgesehen sind.

Aufgrund des Sensors und des mit diesem verbundenen Kontaktkraftreglers kann eine Kontaktkrafteinstellung bzw. Kontaktkraftanpassung des Stromabnehmers auch dann erfolgen, wenn nicht messbare Betriebsbedingungen (z.B. aerodynamische Einflüsse) eine Kontaktkraftänderung verursachen, welche eine Korrektur erforderlich macht, um einen sicheren und verschleißarmen Betrieb des Stromabnehmers zu gewährleisten. Neben dem Kontaktkraftregler und dem ersten Druckregler ist der zweite Druckregler vorgesehen, wodurch eine gewisse Redundanz und somit eine gesteigerte Betriebssicherheit erzielt wird. Eine besondere Effektivität dieser Redundanz wird dann erzielt, wenn der Kontaktkraftregler, der erste Druckregler und der zweite Druckregler mittels Energieversorgungseinrichtungen unterschiedlicher physikalischer Prinzipien gespeist werden.

Im Fall von Defekten, Störungen, Ausfällen etc. des Kontaktkraftreglers und/oder des ersten Druckreglers stellt der zweite Druckregler einen Mindestdruck und somit eine Mindestkontaktkraft zwischen dem Stromabnehmer und dem Fahrdraht oder der Stromschiene bereit, wodurch eine sichere Stromabnahme gewährleistet bleibt.

Ferner bewirkt der Ist-Pilotdruck-Anschluss auf dem zweiten Druckregler, dass ein mittels des zweiten Druckreglers eingestellter Mindestdruck **(d.h.** nicht unterschreitbarer Druck) temporär erhöht werden kann, um auf dynamische Kontaktkraftschwankungen (z.B. aufgrund von aerodynamischen Einflüssen, ungleichmäßigen Fahrdrahtverläufen etc.) rasch reagieren zu können, d.h. rasch eine ausreichende Kontaktkraft zwischen Stromabnehmer und Fahrdraht bzw. Stromschiene bereitstellen zu können.

Aufgrund des Kontaktkraftreglers können bestimmte Messfahrten zur Anpassung von Stromabnehmer-Windleitblechen, welche die Kontaktkraft zwischen dem Stromabnehmer und dem Fahrdraht beeinflussen, im Zulassungsverfahren des Schienenfahrzeugs verkürzt werden bzw. entfallen, da eine präzise Kontaktkraftregelung durch den Kontaktkraftregler erfolgt und die Stromabnehmer-Windleitbleche nur grob dimensioniert werden müssen.

Ferner bewirkt die Kontaktkraftregelung einen reduzierten Verschleiß des Stromabnehmers und des Fahrdrahts, wodurch Wartungs- und Instandhaltungsintervalle verlängert werden können.

Es ist günstig, wenn der zumindest eine Sensor als auf einem Schleifstück des Stromabnehmers angeordneter Dehnungssensor ausgebildet ist.

Durch diese Maßnahme wird eine einfache und robuste Bestimmung von Kontaktkräften erzielt. Ist der Dehnungssensor als optischer Sensor (z.B. als Faser-Bragg-Gitter-Sensor) ausgeführt, so wird eine besonders hohe Messempfindlichkeit, welche eine Messung sehr geringer Dehnungen ermöglicht, erzielt. Weiterhin können optische Sensoren auch in Hochspannungsumgebungen, d.h. beispielsweise unmittelbar auf dem Stromabnehmer, angeordnet sein.

Eine vorteilhafte Lösung erhält man, wenn in einem Datenspeicher des Kontaktkraftreglers Kontaktkräfte gespeichert sind.

Durch diese Maßnahme wird eine unmittelbare oder zeitlich verzögerte Auswertung der Kontaktkräfte bzw. von Kontaktkraftverläufen ermöglicht. Dadurch können Schäden des Fahrdrahts oder des Stromabnehmers detektiert werden.

Eine günstige Lösung wird erzielt, wenn in den Kontaktkraftregler Kennlinien implementiert sind. Diese Kennlinien geben dem Kontaktkraftregler beispielsweise Drücke oder Soll-Kontaktkräfte in Abhängigkeit der Fahrgeschwindigkeit des Schienenfahrzeugs vor.

Durch diese Maßnahme werden eine besonders präzise Kontaktkraftregelung sowie eine Kontrolle gemessener Kontaktkräfte ermöglicht.

Ferner bleibt dadurch auch im Fall eines Defekts, einer Störung etc. des Sensors oder einer Messkette die Kontaktkraftregelung zumindest als eingeschränkte, d.h. rein kennlinienbasierte Regelung funktionsfähig.

Nachfolgend wird die Erfindung anhand von Ausführungsbeispielen näher erläutert.

Es zeigen beispielhaft:
- Fig. 1:: Blockschaltbild einer beispielhaften Ausführungsvariante einer erfindungsgemäßen Vorrichtung zur Regelung eines Stromabnehmers, und
- Fig. 2:: Schaltplan einer beispielhaften Ausführungsvariante einer erfindungsgemäßen Vorrichtung zur Regelung eines Stromabnehmers.

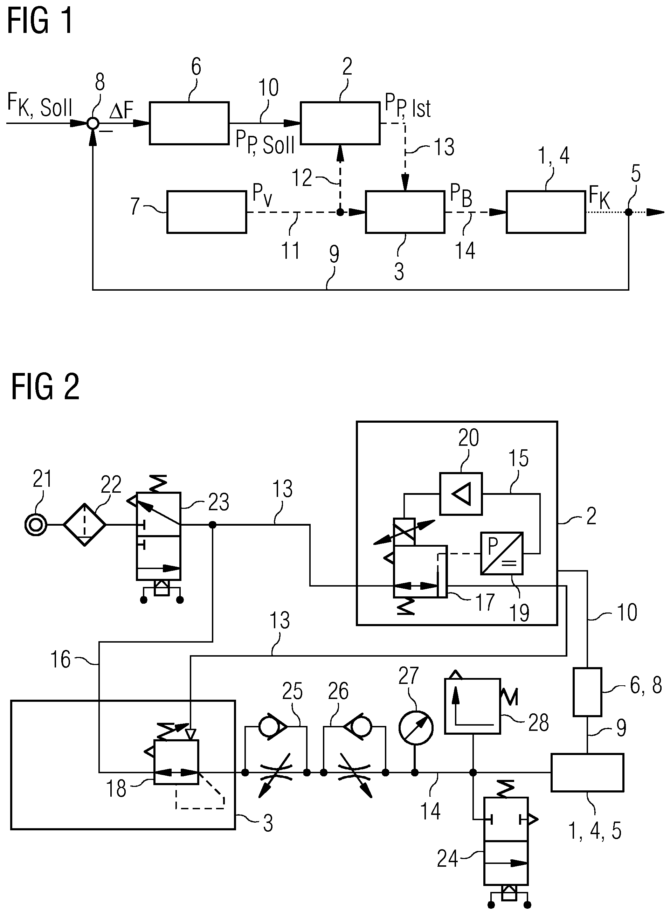

Fig. 1 zeigt ein Blockschaltbild einer beispielhaften Ausführungsvariante einer erfindungsgemäßen Vorrichtung zur Regelung eines mittels einer Betätigungsvorrichtung 4 heb- und senkbaren Stromabnehmers 1 eines nicht gezeigten Schienenfahrzeugs, welcher als Einholmstromabnehmer bzw. Pantograph ausgebildet ist. Entlang einer Regelstrecke einer Kaskadenregelung sind ein elektropneumatischer erster Druckregler 2, ein mechanisch-pneumatischer zweiter Druckregler 3 sowie ein elektronischer Kontaktkraftregler 6 vorgesehen.

Der Stromabnehmer 1 und die Vorrichtung zu dessen Regelung sind teilweise auf, teilweise in einem Wagenkasten des Schienenfahrzeugs angeordnet.

Zur Messung einer Kontaktkraft F_{K} zwischen dem Stromabnehmer 1 und einem nicht gezeigten Fahrdraht ist ein als bekannter optischer Faser-Bragg-Gitter-Sensor (Dehnungssensor) ausgebildeter Sensor 5 vorgesehen. Dieser ist auf einem nicht dargestellten Dehnungselement angeordnet. Das Dehnungselement ist zwischen einem nicht gezeigten Haltegestell, welches mit einer Oberseite des Stromabnehmers 1 verbunden ist, und einem Schleifstück, welches, ebenfalls nicht dargestellt, den Fahrdraht kontaktiert, angeordnet. Die zwischen dem Stromabnehmer 1 und dem Fahrdraht auftretende Kontaktkraft F_{K} bewirkt eine zu dieser proportionale Dehnung des Dehnungselements und somit eine zu der Kontaktkraft F_{K} proportionale Dehnung des Sensors 5.

Diese Dehnung wird mittels eines bekannten physikalischmathematischen Zusammenhangs (Hookesches Gesetz) zwischen der Dehnung, einem Elastizitätsmodul, einer Spannung, einer Fläche und der Kontaktkraft F_{K} in die Kontaktkraft F_{K} umgerechnet und als Kontaktkraftsignal über eine elektrische erste Leitung 9 und über ein Vergleichsglied 8 in einen Kontaktkraftregler 6 geleitet.

Erfindungsgemäß ist es auch denkbar, ein von dem Sensor 5 erzeugtes Signal unmittelbar, d.h. als optisches Signal an den Kontaktkraftregler 6 zu übertragen, wobei die erste Leitung 9 hierfür als optische Leitung ausgeführt ist. Mittels des Vergleichsglieds 8 wird aus einer Rückführung der Kontaktkraft F_{K} und einer Soll-Kontaktkraft F_{K,soll}, welche als Führungsgröße fungiert, eine Differenz-Kontaktkraft ΔF, welche als Regeldifferenz fungiert, gebildet.

In dem Kontaktkraftregler 6 wird aus der Differenz-Kontaktkraft ΔF ein Soll-Pilotdruck p_{P,Soll} als Vorgabe für eine temporäre Druck- bzw. Kontaktkrafterhöhung auf Grundlage eines über den zweiten Druckregler 3 einzustellenden, als Mindestdruck fungierenden Basisdrucks p_{A} gebildet. In einer nicht gezeigten Recheneinheit des Kontaktkraftreglers 6 wird die Differenz-Kontaktkraft ΔF mittels bekannter, in die Recheneinheit implementierter Zusammenhänge zwischen der Differenz-Kontaktkraft ΔF, einer charakteristischen ersten Fläche der Betätigungsvorrichtung 4, weiteren Parametern der Betätigungsvorrichtung 4, einer charakteristischen zweiten Fläche zwischen dem Schleifstück und dem Fahrdraht, Wirkungsgraden **(z.B.** Wirkungsgrad eines nicht gezeigten Stromabnehmergestänges) in den Soll-Pilotdruck p_{P,soll} umgerechnet und über eine elektrische zweite Leitung 10 an den ersten Druckregler 2 übertragen. Erfindungsgemäß ist es auch vorstellbar, dass die dem Kontaktkraftregler 6 zugeordnete Recheneinheit örtlich getrennt von dem Kontaktkraftregler 6 angeordnet und mit dem Kontaktkraftregler 6 über entsprechende Leitungswege verbunden ist.

In den Kontaktkraftregler 6 ist ein Regelalgorithmus implementiert, mittels dessen der erste Druckregler 2 in einer Weise geschaltet wird, so dass Absolutwerte der Differenz-Kontaktkraft ΔF minimiert werden.

Der erste Druckregler 2 ist als elektropneumatischer Regler ausgeführt. Es wird mittels dieses ersten Druckreglers 2 der Soll-Pilotdruck p_{P,Soll}, welcher als elektrisches Signal an den ersten Druckregler 2 übertragen wird, in ein pneumatisches Signal umgewandelt.

Der erste Druckregler 2 ist über einen in Fig. 2 gezeigten Versorgungsdruckanschluss 21 sowie eine pneumatische dritte Leitung 11 und eine pneumatische vierte Leitung 12 mit einer Druckversorgung 7, welche einen nicht dargestellten Kompressor aufweist und in welcher ein Versorgungsdruck p_{V} herrscht, verbunden.

Mittels des elektrischen Signals des Soll-Pilotdrucks p_{P,soll} als Vorgabegröße wird aus dem Versorgungsdruck p_{V} ein Ist-Pilotdruck p_{P,Ist} gebildet, welcher über eine pneumatische fünfte Leitung 13 an den zweiten Druckregler 3 übertragen wird.

Der zweite Druckregler 3 ist als mechanisch-pneumatischer Regler ausgeführt. Er ist über den Versorgungsdruckanschluss 21 und die dritte Leitung 11 mit der Druckversorgung 7 verbunden und weist ein Handrad auf. Über das Handrad wird aus dem Versorgungsdruck p_{V} der Basisdruck p_{A} eingestellt. Es wird ein Stromabnehmer-Betätigungsdruck p_{B} gebildet, wobei der Basisdruck p_{A} um den Ist-Pilotdruck p_{P,lst} erhöht wird, woraus der Stromabnehmer-Betätigungsdruck p_{B} als Summendruck oder Proportionaldruck resultiert.

Dieser Stromabnehmer-Betätigungsdruck p_{B} wird über eine pneumatische sechste Leitung 14 an die Betätigungsvorrichtung 4 des Stromabnehmers 1, welche als bekannte Luftfedervorrichtung mit einem nicht gezeigten Luftbalg ausgebildet ist, übermittelt. Druckänderungen in dem Luftbalg bewirken, dass sich der Stromabnehmer 1 hebt oder senkt und somit die Kontaktkraft F_{K} zwischen dem Stromabnehmer 1 und dem Fahrdraht zunimmt oder abnimmt.

Von dem Sensor 5 gemessene Kontaktkräfte F_{K} werden in der Recheneinheit des Kontaktkraftreglers 6 gespeichert und über eine Funkschnittstelle der Recheneinheit mit Antenne an einen Wartungsstand zur Auswertung übertragen.

Die Recheneinheit weist eine Zeiterfassungsvorrichtung auf und ist mit einem nicht gezeigten Global Positioning System (GPS)-Empfänger des Schienenfahrzeugs verbunden. Die Kontaktkräfte F_{K} werden daher zusammen mit Zeit- und Ortsstempeln, welche den Kontaktkräften F_{K} zugeordnet sind, gespeichert. Dadurch ist anhand der gespeicherten Kontaktkräfte F_{K} bzw. daraus gebildeter Kontaktkraftverläufe eine zeitliche und örtliche Detektion von Schäden des Stromabnehmers 1 und/oder des Fahrdrahts möglich. Erfindungsgemäß ist es auch denkbar, dass die Auswertung unmittelbar in der Recheneinheit erfolgt.

Unterschreitet beispielsweise die Kontaktkraft F_{K} einen definierten Schwellwert, so wird in der Recheneinheit ein Warnereignis erzeugt, über eine nicht dargestellte Signalleitung als Warnsignal in einen Führerstand des Schienenfahrzeugs übertragen und dort als Warnhinweis auf einer Anzeige angezeigt.

Bei einem Defekt bzw. einem Ausfall des Sensors 5 oder im Fall sonstiger Störungen erfolgt eine Bildung des Soll-Pilotdrucks p_{P,Soll} mittels Soll-Druckkennlinien, welche als mathematischer Zusammenhang zwischen Soll-Pilotdrücken p_{P,soll} und Fahrgeschwindigkeiten in die Recheneinheit des Kontaktkraftreglers 6 implementiert sind.

Die Recheneinheit umfasst eine von anderen Komponenten des Kontaktkraftreglers 6 unabhängige Stromversorgungseinrichtung, bleibt daher bei einem Defekt, einem Ausfall oder einem Schaden etc. des Kontaktkraftreglers 6 aktiv und übermittelt mittels der Soll-Druckkennlinien Soll-Pilotdrücke p_{P,soll} an den ersten Druckregler 2.

Die Soll-Druckkennlinien geben Soll-Pilotdrücke p_{P,soll} in Abhängigkeit von Fahrgeschwindigkeiten vor. Die Recheneinheit ist mit einer nicht dargestellten Fahrgeschwindigkeitsmesseinrichtung des Schienenfahrzeugs verbunden. Mittels einer gemessenen Fahrgeschwindigkeit und des genannten mathematischen Zusammenhangs zwischen Soll-Pilotdrücken p_{P,soll} und Fahrgeschwindigkeiten wird der zur gemessenen Fahrgeschwindigkeit passende Soll-Pilotdruck p_{P,soll} ermittelt und über die zweite Leitung 10 an den ersten Druckregler 2 übertragen.

Der Stromabnehmer 1 ist in diesem Ausführungsbeispiel als Pantograph ausgebildet. Erfindungsgemäß ist es jedoch auch vorstellbar, dass der Stromabnehmer 1 beispielsweise als Scherenstromabnehmer, als Seitenstromabnehmer für eine Stromschiene oder als andere Vorrichtung eines Fahrzeugs, welche an einen Fahrdraht herangeführt wird, ausgeführt ist. Der Stromabnehmer 1 kann auf Schienenfahrzeugen, aber auch auf anderen Fahrzeugen, wie z.B. Elektrobussen oder Elektrolastkraftwagen angeordnet sein.

In Fig. 2 ist ein pneumatischer Schaltplan jener beispielhaften Ausführungsvariante einer erfindungsgemäßen Vorrichtung zur Regelung eines Stromabnehmers 1 dargestellt, welche auch in Fig. 1 gezeigt ist. Es werden daher teilweise die gleichen Bezugszeichen verwendet.

Die Vorrichtung zur Regelung des Stromabnehmers 1 sowie der Stromabnehmer 1 selbst sind auf einem nicht dargestellten Schienenfahrzeug angeordnet.

Der Stromabnehmer 1 weist eine pneumatische Betätigungsvorrichtung 4 sowie einen als Dehnungssensor ausgeführten Sensor 5 auf, welche im Zusammenhang mit Fig. 1 beschrieben sind.

Messsignale bezüglich einer Kontaktkraft F_{K} des Sensors 5 werden über eine elektrische erste Leitung 9 an einen elektronischen Kontaktkraftregler 6 mit einem Vergleichsglied 8 übermittelt und mittels des Kontaktkraftreglers 6 in einen Soll-Pilotdruck p_{P,soll} umgewandelt.

Der Soll-Pilotdruck p_{P,soll} wird über eine elektrische zweite Leitung 10 an einen bekannten ersten Druckregler 2 übertragen.

Der erste Druckregler 2 ist als elektropneumatischer Regler ausgebildet und weist ein mittels einer verstellbaren Magnetspule betätigtes erstes Druckregelventil 17 mit Federrückstellung und Entlüftung, einen Drucksensor 19 sowie ein Stellelement 20 auf, welche über eine siebente Leitung 15 miteinander verbunden sind.

Der erste Druckregler 2 ist über einen Versorgungsdruckanschluss 21 mit einer in Fig. 1 dargestellten Druckversorgung 7 verbunden.

Mittels des Drucksensors 19 und des Stellelements 20 wird das erste Druckregelventil 17 angesteuert und es wird damit auf Grundlage eines über einen ersten Strang einer pneumatischen fünften Leitung 13 von einem bekannten zweiten Druckregler 3 aus einem Versorgungsdruck p_{V} bereitgestellten Basisdrucks p_{A} sowie des Soll-Pilotdrucks p_{P,soll} ein Ist-Pilotdruck p_{P,lst} gebildet. Der Ist-Pilotdruck p_{P,lst} wird über einen zweiten Strang der fünften Leitung 13 an einen Anschluss eines zweiten Druckregelventils 18 des zweiten Druckreglers 3 übertragen.

Der zweite Druckregler 3 weist ein Handrad auf, das in Fig. 2 als Federsymbol des zweiten Druckregelventils 18 dargestellt ist, und ist über den Versorgungsdruckanschluss 21 mit der Druckversorgung 7 verbunden. Mittels des Handrads wird, beispielsweise von einem Triebfahrzeugführer in einem Führerstand des Schienenfahrzeugs, aus dem Versorgungsdruck p_{V} der Basisdruck p_{A} eingestellt.

Der Versorgungsdruck p_{V} wird über einen Filter 22 und ein erstes Wegeventil 23, welches als vorgesteuertes 3/2-Wegeventil ausgeführt ist, in den ersten Strang der fünften Leitung 13 bzw. in eine achte Leitung 16 eingespeist.

Die achte Leitung 16 und der erste Strang der fünften Leitung 13 entsprechen einer dritten Leitung 11 und einer vierten Leitung 12, die in Fig. 1 gezeigt sind.

Das erste Wegeventil 23 weist eine Federrückstellung sowie eine Entlüftung auf, über welche der erste Strang der fünften Leitung 13 bzw. die achte Leitung 16 entlüftet werden können.

Über die achte Leitung 16 wird der Basisdruck p_{A} an das einstellbare zweite Druckregelventil 18 übertragen, welches eine Entlüftung aufweist. Aus dem Basisdruck p_{A} und dem über den zweiten Strang der fünften Leitung 13 übertragenen und über den Anschluss in das zweite Druckregelventil 18 eingespeisten Ist-Pilotdruck p_{P,lst} wird in dem zweiten Druckregelventil 18 ein Stromabnehmer-Betätigungsdruck p_{B} gebildet. Der Stromabnehmer-Betätigungsdruck p_{B} wird über eine sechste Leitung 14 und ein einstellbares erstes Drosselrückschlagventil 25 sowie ein einstellbares zweites Drosselrückschlagventil 26 mit freien Durchflüssen in jeweils eine Richtung an einen Luftbalg der Betätigungsvorrichtung 4 des Stromabnehmers 1 übertragen und von der Betätigungsvorrichtung 4 in einen Hebe- oder Senkvorgang des Stromabnehmers 1 umgesetzt.

Mittels des ersten Drosselrückschlagventils 25 sowie des zweiten Drosselrückschlagventils 26 können Hebe- und Senkdauern des Stromabnehmers 1 eingestellt werden.

Die sechste Leitung 14 weist weiterhin ein bekanntes Druckmessgerät 27, ein bekanntes Sicherheitsventil 28 sowie ein zweites Wegeventil 24 auf.

Mittels des Sicherheitsventils 28, welches auf einen Druckschwellwert von 6 bar ausgelegt ist und eine Federrückstellung sowie eine Entlüftung aufweist, werden Überdrücke von größer als 6 bar in der sechsten Leitung 14 und somit Schäden (beispielsweise an dem Luftbalg der Betätigungsvorrichtung 4) vermieden.

Mittels des zweiten Wegeventils 24, welches als vorgesteuertes 2/2-Wegeventil mit Federrückstellung und Entlüftung ausgebildet ist, erfolgt bei entsprechender Schaltung eine Schnellabsenkung des Stromabnehmers 1.

### Liste der Bezeichnungen

- 1: Stromabnehmer
- 2: Erster Druckregler
- 3: Zweiter Druckregler
- 4: Betätigungsvorrichtung
- 5: Sensor
- 6: Kontaktkraftregler
- 7: Druckversorgung
- 8: Vergleichsglied
- 9: Erste Leitung
- 10: Zweite Leitung
- 11: Dritte Leitung
- 12: Vierte Leitung
- 13: Fünfte Leitung
- 14: Sechste Leitung
- 15: Siebente Leitung
- 16: Achte Leitung
- 17: Erstes Druckregelventil
- 18: Zweites Druckregelventil
- 19: Drucksensor
- 20: Stellelement
- 21: Versorgungsdruckanschluss
- 22: Filter
- 23: Erstes Wegeventil
- 24: Zweites Wegeventil
- 25: Erstes Drosselrückschlagventil
- 26: Zweites Drosselrückschlagventil
- 27: Druckmessgerät
- 28: Sicherheitsventil

- F_{K}: Kontaktkraft
- F_{K,Soll}: Soll-Kontaktkraft
- p_{P,Soll}: Soll-Pilotdruck
- p_{V}: Versorgungsdruck
- p_{P,lst}: Ist-Pilotdruck
- p_{A}: Basisdruck
- p_{B}: Stromabnehmer-Betätigungsdruck
- ΔF: Differenz-Kontaktkraft

## Patentansprüche

1. Vorrichtung zur Regelung eines pneumatisch betätigten Stromabnehmers für ein Fahrzeug, umfassend eine Regelstrecke,
die einen Kontaktkraftregler (6), einen ersten Druckregler, einen zweiten Druckregler sowie eine Betätigungsvorrichtung aufweist, sowie umfassend zumindest einen Sensor (5) und eine Druckversorgung (7), wobei der zumindest eine Sensor (5) zur Messung einer Kontaktkraft F_{K} zwischen einem Stromabnehmer (1) und einem Fahrdraht auf dem Stromabnehmer (1) anordenbar ist, wobei der Sensor (5) mit dem Kontaktkraftregler (6) der Regelstrecke signalleitend verbunden ist,
und wobei der erste Druckregler (2) mit dem Kontaktkraftregler (6), dem zweiten Druckregler (3) sowie der Druckversorgung (7) signalleitend gekoppelt ist, wobei der zweite Druckregler (3) einen Anschluss für einen Ist-Pilotdruck p_{P,Ist} aus dem ersten Druckregler (2) aufweist, und
wobei zwischen dem zweiten Druckregler (3) und der Druckversorgung (7) sowie zwischen dem zweiten Druckregler (3) und der Betätigungsvorrichtung (4) signalleitende Verbindungen vorgesehen sind, **dadurch gekennzeichnet, dass** aus dem elektropneumatischen ersten Druckregler (2), dem mechanischpneumatischen zweiten Druckregler (3) sowie dem elektronischen Kontaktkraftregler (6) der Regelstrecke eine Kaskadenregelung gebildet ist.

2. Vorrichtung nach Anspruch 1, **dadurch gekennzeichnet, dass** der Kontaktkraftregler (6) als elektronischer Regler ausgeführt ist, wobei zwischen dem Kontaktkraftregler (6) und dem zumindest einen Sensor (5) sowie zwischen dem Kontaktkraftregler (6) und dem ersten Druckregler (2) elektrische Leitungswege vorgesehen sind.

3. Vorrichtung nach Anspruch 1, **dadurch gekennzeichnet, dass** der Kontaktkraftregler (6) als elektronischer Regler ausgeführt ist, wobei zwischen dem Kontaktkraftregler (6) und dem zumindest einen Sensor (5) optische Leitungswege sowie zwischen dem Kontaktkraftregler (6) und dem ersten Druckregler (2) elektrische Leitungswege vorgesehen sind.

4. Vorrichtung nach einem der Ansprüche 1 bis 3, **dadurch gekennzeichnet, dass** der erste Druckregler (2) als elektropneumatischer Regler ausgeführt ist, wobei zwischen dem ersten Druckregler (2) und der Druckversorgung (7) sowie zwischen dem ersten Druckregler (2) und dem zweiten Druckregler (3) pneumatische Leitungswege vorgesehen sind.

5. Vorrichtung nach einem der Ansprüche 1 bis 4, **dadurch gekennzeichnet, dass** der zweite Druckregler (3) als mechanisch-pneumatischer Regler ausgeführt ist, wobei zwischen dem zweiten Druckregler (3) und der Druckversorgung (7) sowie zwischen dem zweiten Druckregler (3) und der Betätigungsvorrichtung (4) pneumatische Leitungswege vorgesehen sind.

6. Vorrichtung nach einem der Ansprüche 1 bis 5, **dadurch gekennzeichnet, dass** der zumindest eine Sensor (5) als auf einem Schleifstück des Stromabnehmers (1) angeordneter Dehnungssensor ausgebildet ist.

7. Vorrichtung nach einem der Ansprüche 2 bis 6, **dadurch gekennzeichnet, dass** in einem Datenspeicher des Kontaktkraftreglers (6) Kontaktkräfte F_{K} gespeichert sind.

8. Vorrichtung nach einem der Ansprüche 2 bis 6, **dadurch gekennzeichnet, dass** in den Kontaktkraftregler (6) Kennlinien implementiert sind.

9. Stromabnehmer mit einer Vorrichtung nach einem der Ansprüche 1 bis 8.

10. Regelungsverfahren zum Betrieb einer Vorrichtung zur Regelung eines pneumatisch betätigten Stromabnehmers für ein Fahrzeug nach einem der Ansprüche 1 bis 8,
wobei die zwischen dem Stromabnehmer (1) und einer Fahrleitung wirkende Kontaktkraft F_{K} mittels des zumindest einen Sensors (5) gemessen wird, wobei aus der gemessenen Kontaktkraft F_{K} und einer Soll-Kontaktkraft F_{K,soll} mittels des Kontaktkraftreglers (6) ein Soll-Pilotdruck p_{P,Soll} gebildet wird, **dadurch gekennzeichnet,**
**dass** aus dem Soll-Pilotdruck p_{P,Soll} mittels des ersten Druckreglers (2) über Einstellung eines Versorgungsdrucks p_{V} der Druckversorgung (7) der Ist-Pilotdruck p_{P,lst} gebildet wird, und dass mittels des zweiten Druckreglers (3) aus einem mittels des Versorgungsdrucks p_{V} eingestellten Basisdruck p_{A} und dem Ist-Pilotdruck p_{P,Ist} ein Stromabnehmer-Betätigungsdruck p_{B} erzeugt wird, wobei der Basisdruck p_{A} um den Ist-Pilotdruck p_{P,Ist} erhöht wird, woraus der Stromabnehmer-Betätigungsdruck p_{B} als Summendruck oder Proportionaldruck resultiert.

11. Regelungsverfahren nach Anspruch 10, **dadurch gekennzeichnet, dass** die gemessene Kontaktkraft F_{K} in dem Datenspeicher des Kontaktkraftreglers (6) gespeichert wird.

12. Regelungsverfahren nach Anspruch 10 oder 11, **dadurch gekennzeichnet, dass** der Soll-Pilotdruck p_{P,Soll} mittels der in den Kontaktkraftregler (6) implementierten Kennlinien gebildet wird.

## Claims

1. Device for controlling a pneumatically actuated current collector for a vehicle, comprising a control system that has a contact force controller (6), a first pressure controller, a second pressure controller and an actuation device, and comprising at least one sensor (5) and a pressure supply (7), wherein the at least one sensor (5) is able to be arranged on a current collector (1) in order to measure a contact force F_{K} between the current collector (1) and an overhead wire, wherein the sensor (5) is connected to the contact force controller (6) of the control system in a signal-conducting manner,
and wherein the first pressure controller (2) is coupled to the contact force controller (6), the second pressure controller (3) and the pressure supply (7) in a signal-conducting manner, wherein the second pressure controller (3) has a port for an actual pilot pressure p_{P,actual} from the first pressure controller (2), and
wherein signal-conducting connections are provided between the second pressure controller (3) and the pressure supply (7) and also between the second pressure controller (3) and the actuation device (4), **characterized in that** the electropneumatic first pressure controller (2), the mechanical-pneumatic second pressure controller (3) and the electronic contact force controller (6) of the control system form a cascade control mechanism.

2. Device according to Claim 1, **characterized in that** the contact force controller (6) is designed as an electronic controller, wherein electrical line paths are provided between the contact force controller (6) and the at least one sensor (5) and also between the contact force controller (6) and the first pressure controller (2).

3. Device according to Claim 1, **characterized in that** the contact force controller (6) is designed as an electronic controller, wherein optical line paths are provided between the contact force controller (6) and the at least one sensor (5) and electrical line paths are provided between the contact force controller (6) and the first pressure controller (2).

4. Device according to one of Claims 1 to 3, **characterized in that** the first pressure controller (2) is designed as an electropneumatic controller, wherein pneumatic line paths are provided between the first pressure controller (2) and the pressure supply (7) and also between the first pressure controller (2) and the second pressure controller (3).

5. Device according to one of Claims 1 to 4, **characterized in that** the second pressure controller (3) is designed as a mechanical-pneumatic controller, wherein pneumatic line paths are provided between the second pressure controller (3) and the pressure supply (7) and also between the second pressure controller (3) and the actuation device (4).

6. Device according to one of Claims 1 to 5, **characterized in that** the at least one sensor (5) is designed as a strain sensor arranged on a contact strip of the current collector (1).

7. Device according to one of Claims 2 to 6, **characterized in that** contact forces F_{K} are stored in a data memory of the contact force controller (6).

8. Device according to one of Claims 2 to 6, **characterized in that** characteristic curves are implemented in the contact force controller (6).

9. Current collector having a device according to one of Claims 1 to 8.

10. Control method for operating a device for controlling a pneumatically actuated current collector for a vehicle according to one of Claims 1 to 8,
wherein the contact force F_{K} acting between the current collector (1) and an overhead wire is measured by way of the at least one sensor (5), wherein a setpoint pilot pressure p_{P,setpoint} is formed from the measured contact force F_{K} and a setpoint contact force F_{K,setpoint} by way of the contact force controller (6), **characterized**
**in that** the actual pilot pressure p_{P,actual} is formed from the setpoint pilot pressure p_{P,setpoint} by way of the first pressure controller (2) by setting a supply pressure p_{V} of the pressure supply (7), and in that a current collector actuation pressure p_{B} is generated by way of the second pressure controller (3) from a base pressure p_{A} set by way of the supply pressure p_{V} and the actual pilot pressure p_{P,actual}, wherein the base pressure p_{A} is increased by the actual pilot pressure p_{P,actual}, giving the current collector actuation pressure p_{B} as the total pressure or proportional pressure.

11. Control method according to Claim 10, **characterized in that** the measured contact force F_{K} is stored in the data memory of the contact force controller (6).

12. Control method according to Claim 10 or 11, **characterized in that** the setpoint pilot pressure p_{P,setpoint} is formed by way of the characteristic curves implemented in the contact force controller (6).

## Revendications

1. Dispositif destiné à la régulation d'un collecteur de courant actionné de manière pneumatique pour un véhicule, comprenant un système réglé qui présente un régulateur de force de contact (6), un premier régulateur de pression, un second régulateur de pression ainsi qu'un dispositif d'actionnement, ainsi que comprenant au moins un capteur (5) et une alimentation en pression (7),
dans lequel l'au moins un capteur (5) destiné à la mesure d'une force de contact F_{K} entre un collecteur de courant (1) et un fil de contact peut être disposé sur le collecteur de courant (1), dans lequel le capteur (5) est relié de manière conductrice de signaux au régulateur de force de contact (6) du système réglé, dans lequel le premier régulateur de pression (2) est couplé de manière conductrice de signaux au régulateur de force de contact (6), au second régulateur de pression (3) ainsi qu'à l'alimentation en pression (7), dans lequel le second régulateur de pression (3) présente un raccord pour une pression pilote réelle p_{P,Ist} en provenance du régulateur de pression (2), et
dans lequel des liaisons conductrices de signaux sont prévues entre le second régulateur de pression (3) et l'alimentation en pression (7) ainsi qu'entre le second régulateur de pression (3) et le dispositif d'actionnement (4), **caractérisé en ce qu'**une régulation en cascade est formée à partir du premier régulateur de pression électropneumatique (2), du second régulateur de pression mécanique-pneumatique (3) ainsi que du régulateur de force de contact électronique (6) du système réglé.

2. Dispositif selon la revendication 1, **caractérisé en ce que** le régulateur de force de contact (6) est réalisé en tant que régulateur électronique, dans lequel des voies de transmission électrique sont prévues entre le régulateur de force de contact (6) et l'au moins un capteur (5) ainsi qu'entre le régulateur de force de contact (6) et le premier régulateur de pression (2).

3. Dispositif selon la revendication 1, **caractérisé en ce que** le régulateur de force de contact (6) est réalisé en tant que régulateur électronique, dans lequel des voies de transmission optique sont prévues entre le régulateur de force de contact (6) et l'au moins un capteur (5) ainsi qu'entre le régulateur de force de contact (6) et le premier régulateur de pression (2).

4. Dispositif selon l'une quelconque des revendications 1 à 3, **caractérisé en ce que** le premier régulateur de pression (2) est réalisé en tant que régulateur électropneumatique, dans lequel des voies de transmission pneumatique sont prévues entre le premier régulateur de pression (2) et l'alimentation en pression (7) ainsi qu'entre le premier régulateur de pression (2) et le second régulateur de pression (3).

5. Dispositif selon l'une quelconque des revendications 1 à 4, **caractérisé en ce que** le second régulateur de pression (3) est réalisé en tant que régulateur mécanico-pneumatique, dans lequel des voies de transmission pneumatique sont prévues entre le second régulateur de pression (3) et l'alimentation en pression (7) ainsi qu'entre le second régulateur de pression (3) et le dispositif d'actionnement (4).

6. Dispositif selon l'une quelconque des revendications 1 à 5, **caractérisé en ce que** l'au moins un capteur (5) est réalisé en tant que capteur d'allongement disposé sur une semelle de contact du collecteur de courant (1).

7. Dispositif selon l'une quelconque des revendications 2 à 6, **caractérisé en ce que** des forces de contact F_{K} sont stockées dans une mémoire de données du régulateur de force de contact (6).

8. Dispositif selon l'une quelconque des revendications 2 à 6, **caractérisé en ce que** des courbes caractéristiques sont mises en œuvre dans le régulateur de force de contact (6).

9. Collecteur de courant avec un dispositif selon l'une quelconque des revendications 1 à 8.

10. Procédé de régulation destiné au fonctionnement d'un dispositif destiné au réglage d'un collecteur de courant actionné de manière pneumatique pour un véhicule selon l'une quelconque des revendications 1 à 8,
dans lequel la force de contact F_{K} agissant entre le collecteur de courant (1) et une ligne de contact est mesurée au moyen de l'au moins un capteur (5), dans lequel une pression pilote de consigne p_{P,Soll} est formée à partir de la force de contact F_{K} mesurée et d'une force de contact de consigne F_{K,Soll} au moyen du régulateur de force de contact (6), **caractérisé en ce que**
la pression pilote réelle p_{P,Ist} est formée à partir de la pression pilote de consigne p_{P,Soll} au moyen du premier régulateur de pression (2), par réglage d'une pression d'alimentation p_{V} de l'alimentation en pression (7) de la pression pilote réelle p_{P,Ist} et **en ce qu'**au moyen du second régulateur de pression (3) une pression d'actionnement du collecteur de courant p_{B} est générée à partir d'une pression de base p_{A} réglée au moyen de la pression d'alimentation p_{V} et de la pression pilote réelle p_{P,Ist}, dans lequel la pression de base p_{A} est augmentée de la pression pilote réelle p_{P,Ist}, d'où résulte la pression d'actionnement du collecteur de courant p_{B} en tant que pression de somme ou pression proportionnelle.

11. Procédé de régulation selon la revendication 10, **caractérisé en ce que** la force de contact mesurée F_{K} est stockée dans la mémoire de données du régulateur de force de contact (6).

12. Procédé de régulation selon la revendication 10 ou 11, **caractérisé en ce que** la pression pilote de consigne p_{p,Soll} est formée au moyen des courbes caractéristiques mises en œuvre dans le régulateur de force de contact (6).
